# EUROPEAN PATENT SPECIFICATION

(11) **EP 1 579 455 B1**
(45) Date of publication and mention of the grant of the patent: **16.09.2009**
(21) Application number: 03772480.4
(22) Date of filing: 17.11.2003
(51) Int. Cl.: G11B 33/14, H04R 5/02, H04N 5/60, H04N 5/74, H04B 15/00, G11B 5/596

(54) **METHOD AND CIRCUIT FOR OPERATING A STORAGE DEVICE**
VERFAHREN UND SCHALTUNG ZUM BETRIEB EINES SPEICHERGERÄTS
PROCEDE ET CIRCUIT DE COMMANDE DE DISPOSITIF DE STOCKAGE

(30) Priority: 16.12.2002 EP 02080309
(43) Date of publication of application: 28.09.2005
(73) Proprietor: Koninklijke Philips Electronics N.V., 5621 BA Eindhoven (NL)
(72) Inventor: GEERLINGS, Alexander, C., NL-5656 AA Eindhoven (NL); MESUT, Ozcan, NL-5656 AA Eindhoven (NL)
(74) Representative: Groenendaal, Antonius W. M.
(86) International application number: PCT/IB2003/005275
(87) International publication number: WO 2004/055820

(56) References cited:
- EP-A- 0 722 260
- EP-A- 1 185 094
- US-A- 4 831 449
- US-A- 6 067 362
- US-A1- 2003 067 708
- US-B1- 6 314 473

## Description

The invention relates to a method of and circuit for operating a storage device sensitive to vibrations in an environment with a source of vibrations. The invention also relates to a consumer electronics apparatus comprising means for receiving a stream of audio-visual data; a storage device arranged to store the stream of audio-visual data on a disk and a source of vibrations, and such a circuit.

US 6,067,362 discloses an apparatus that reduces the gain of at least certain frequency components of sound produced by a sound system when sound vibrations are expected to hamper the performance parameters of the apparatus. When the level of the output sound or at least of one frequency component of the output sound is too high, the gain of the sound or of that particular frequency component is reduced. The reduction of gain is aimed at preventing a negative influence of vibrations caused by a high sound level on components of the apparatus like a CD-player or a hard disk.

The disclosed circuit always reduces the gain of the sound produced by the apparatus when it exceeds a certain threshold, irrespective of the activity of e.g. the CD-player or the hard disk.

US 4,831,449 discloses in a television apparatus having a television receiver, a video tape recorder for recording and reproducing video and audio information included in a received television signal and being susceptible to distortion of the recorded video information when subjected to vibrations at substantially a predetermined mechanical resonant vibration frequency, speakers for audibly reproducing the audio information of the television signal, and a single cabinet containing the television receiver, the video tape recorder and the speakers so that the video tape recorder is influenced by vibrations generated in response to operation of the speakers; an audio signal processor which acts on the received and reproduced audio information to provide an audio output signal for driving the speakers includes a suppression circuit operative in at least the recording mode of the video tape recorder for relatively suppressing at least a component of the audio output signal having substantially the predetermined mechanical resonant vibration frequency.

It is an object of the invention to only have the vibrations reduced when these vibrations have a material effect on the performance of the storage device. The invention is defined by the independent claims. The dependent claims define advantageous embodiments.

The performance of the storage device - whether it is a hard disk drive, an optical disk drive or any other kind of storage device - may be measured as the maximum achievable data retrieval or storage rate or the access time. The pre-determined level may be determined by the requirements of the application retrieving data from or storing data in the storage device.

The main advantage of the invention is that the influence of the vibrations is only reduced - by e.g. attenuation of sound produced by a sound source - when this is necessary to guarantee a required minimum performance of the storage device. When for example only a bit-rate of 2 Mb per second is required, it is not necessary to take action when the maximum achievable bit-rate of the storage device drops from 35 Mb per second to 5 Mb per second due to vibrations.

In other words: the invention ensures that the apparatus functions according to user preferences as long as possible, i.e. until performance of the apparatus is hampered in a way that a user notices it.

In an embodiment of the invention, the action comprises providing a message to a user to reduce the vibrations.

Automatic setting of an apparatus, said setting having been set by a user, may be annoying for said user. To prevent annoyance, the user may be provided with a message telling him that he should reduce vibrations, for example reduce the sound level, to ensure proper functioning of the storage device.

In an embodiment of the invention, when the performance decreases below the pre-determined level and the environmental temperature of the storage device is above a further pre-determined level, no action is taken.

The performance of a storage device, and especially the performance of a hard disk drive, is influenced by the temperature of the storage device. A hot environment may also cause performance degradation of the storage device, below the pre-determined level at which the method according to the invention takes action. However, reducing vibrations would have little or no effect on the performance of the hard disk drive. Therefore, no action is taken when the performance of the storage device is reduced to below a pre-determined level and the temperature of the storage device is above a further pre-determined level.

In a further embodiment of the invention, the source of vibrations is a loudspeaker, and the loudspeaker and the storage device are comprised in the same housing and the housing is a consumer electronics apparatus; the storage device is arranged to record an incoming stream of audio-visual data; the consumer electronics apparatus is arranged to reproduce the incoming stream of audio-visual data by means of a screen and the loudspeaker; and wherein the method comprises the steps of: storing the incoming stream of audio-visual data on a disk by the storage device, and reproducing the stored stream of audio-visual data stored on the disk by means of a screen and the loudspeaker, and the action to reduce the influence of vibrations generated by the source of vibrations comprises the step of advising a user to render the incoming stream of audio-visual data instead of the stored stream of audio-visual data.

Timeshifting of video data with a time period of for example 5 minutes or even a couple of hours is known. Most implementations use a hard disk, to which data is written simultaneously with the reading of data that has been stored for the time period mentioned, say 5 minutes. Such an implementation may be built in a stand-alone video recorder, but also in a TV-set. Most known TV-sets also have built-in speakers. When the sound volume is so high that sound vibrations interfere with the operation of the hard disk, this may affect the time shift operation - reading and writing of data - in such a way that the quality of the reading and writing process is affected, which is disadvantageous to a user.

One solution could be the reduction of gain, but when a user does not accept this option, it might be an option to switch from time-shifted viewing to live viewing. When the time-shift delay is only small, this will not be a big problem for a user and he can fast forward to live reproduction of the TV-program. In the case of live viewing, the hard disk does not have to be used and when the hard disk is not in operation, operation cannot be hampered by vibrations, which is a clear advantage.

In yet a further embodiment of the invention, the housing is a consumer electronics apparatus arranged to reproduce of at least audio data; at least one further loudspeaker, not comprised by the consumer electronics apparatus, is connected to the consumer electronics apparatus; and the action comprises: halting reproduction of the audio data through the loudspeaker comprised by the consumer electronics apparatus; and starting reproduction of the audio data through the further loudspeaker.

Most TV-sets - and other consumer electronics devices - are equipped with connections to connect the TV-set to further speakers or home entertainment systems. This enables a user to connect his TV-set to further and - most often - also better speakers. Usually, such speakers are located away from the TV-set, so vibrations of such speakers are unlikely to influence the performance of the storage device in the TV-set.

Therefore, in the case of vibrations hampering performance of the storage device, vibrations due to sound reproduction by speakers comprised by the TV-set, user inconvenience is reduced to a minimum when switching sound reproduction to remote speakers. This minimized user inconvenience is of course a great advantage of this embodiment.

In again a further embodiment of the invention, the source of vibrations is comprised by a first apparatus and the storage device is comprised by a second apparatus; the first and the second apparatus are connected through a network link; the action is controlling the first apparatus by reducing the power of the vibrations caused by the source of vibrations.

Home networks enable communication between all sorts of electronics devices; for example between a home storage server and a large speaker. When these two devices are located not very far away, about a meter, the vibrations of the large speaker while reproducing audio data, may hamper proper operation of the server. To reduce the influence of the vibrations produced by the speaker on the server, the server can control the gain of the speaker and reduce it.

In another embodiment of the invention, the pre-determined level is replaced by a further lower pre-determined level when the performance of the storage device is below the predetermined level during a pre-determined period.

The performance of the storage device may well be below the threshold at which, according to the invention, action is taken for a longer period of time. In some cases, this might be the case when a user prefers a high sound level, especially of lower frequency components, and takes the performance degradation of the storage device and all its consequences for granted. In that case, action is taken continuously, which may be quite annoying to a user of the consumer electronics apparatus according to the invention.

To prevent this, this embodiment replaces the pre-determined level below which action is taken to reduce the influence of the vibrations by a further lower pre-determined level when the performance of the storage device is below the pre-determined level during a longer period of time.

Embodiments of the invention will now be presented by means of Figures, in which:
Fig. 1 shows an embodiment of the consumer electronics apparatus comprising an embodiment of the circuit according to the invention;
Fig. 2 shows a TV-set as a further embodiment of the invention;
Fig. 3 shows a TV-set connected to satellite speakers as a further embodiment of the invention;
Fig. 4 shows a network environment as an embodiment of the invention; and
Fig. 5 shows a TV-set connected to a subwoofer unit as another embodiment of the invention.

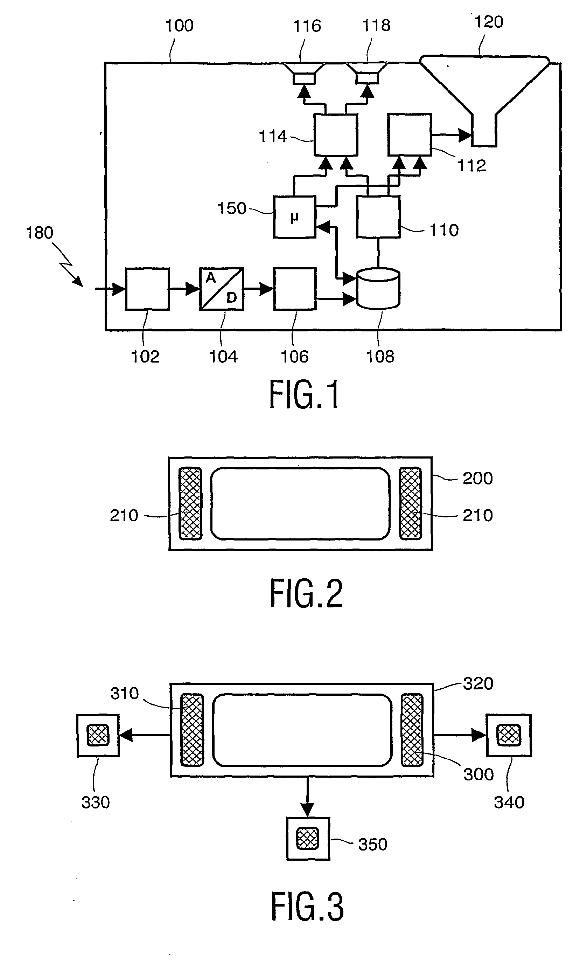

Fig. 1 shows an apparatus 100 as an embodiment of the consumer electronics device according to the invention. The apparatus 100 comprises a receiver 102 for receiving a signal 180 from a data source like cable, satellite, roof antenna and the like, an analogue to digital converter (A/D converter) 104, a compression unit 106, a storage device 108, a decompression unit 110, a video processor 112, an audio processor 114, a left speaker 116, a right speaker 118, a display unit 120 and a control unit 150.

The receiver 102 is arranged to select and derive a baseband signal from the incoming signal 180. The baseband signal is sent to the A/D converter 104 to convert the baseband signal to a digital stream of audio-visual data. The stream of audio-visual data is transferred to the compression unit 106, which compresses the stream. When the baseband signal is already digital, as in Digital Video Broadcasting (DVB), the A/D converter 104 is obsolete and in some cases, even the compression unit 106 is obsolete, because the incoming signal is already a digital compressed stream of audio-visual data.

The compressed stream of audio-visual data is stored in the storage device 108, which in this embodiment is a hard disk drive. The stored stream can be reproduced by the left speaker 116, the right speaker 118 and the display unit 120. The stream can be reproduced directly upon storage, but also a few minutes later or even hours or days later. In this way, the storage device 108 can be used for a time-shift operation, in which a user is enabled to pause the reproduction of a live television program and continue the reproduction with a delay, by viewing data stored in the storage device 108. During the reproduction, data received is still stored in the storage device 108.

For presentation of the stored stream of audio-visual data, the stream is decompressed by the decompression unit 110. The decompression unit 110 also splits the stream of audio-visual data into an audio part and a video part.

The video part is further processed by the video processor 112 and the audio part is further processed by the audio processor 114. The video processor 112 converts the digital video part to an analogue video part and processes the analogue video signal in such a way that it can be presented by the display unit 120. The display unit 120 may be embodied by a cathode ray tube, a liquid crystal display, a plasma display or any other video display means.

The audio processor 14 converts the digital audio part to an analogue audio part and process the analogue audio signal in such a way that it can be reproduced by the left speaker 116 and the right speaker 118. Although in this embodiment a stereo audio set-up is presented, it will be apparent to a person skilled in the art that any kind of audio set-up is possible, from mono to any imaginable multi-channel sound set-up.

In this embodiment, the speakers are comprised by the apparatus 100. This may be a problem for the storage device, as has been acknowledged by the prior art. Vibrations generated by the speakers disturb the functionality of the storage device 108. Examples of this are numerous, especially in the case of a disk-based memory like a Digital Versatile Disc or a hard disk drive. Vibrations propagating into the actuator or disk assembly are viewed as external disturbances, which makes it more difficult for the pick-up unit to follow a track on the disk.

Besides, the vibrations affect the pick up unit itself. Vibration cause bad reading of data leading to degradation of the performance of the memory and in the worst case, even crash of the pick-up unit in the disk, which is disastrous for the lifetime and performance aspects of the storage device. Such effects are often obscured for a while to the integral apparatus 100 by error handling procedures in the apparatus 100. Only a performance monitoring tool may detect the onset of these changes.

Prior-art systems try to kill the vibrations but do it in a rigid way, even when this is not necessary. For example, when the storage device is not in use and the pick-up unit is in a safe position, vibrations cannot degrade the performance of the storage device. Therefore, the vibrations do not have to be killed. Furthermore, when only little performance is needed, say 20% of the nominal performance, and vibrations bring down performance to a level of 50% of the nominal performance, the vibrations do not have to be killed either.

This is an important basic principle. Especially when the vibrations are caused by a sound source, it is not desirable to unnecessarily modify the sound volume because this is annoying for a user. Using the method according to the invention, action is only taken to reduce the vibrations when the vibrations cause unacceptable degradation of the performance of the storage device; when the performance drops below a pre-determined level. Of course, the setting of the pre-determined level may depend on the application that uses the storage device.

The performance may be measured in various ways. In the embodiment of the invention described by means of Fig. 1, the control unit 150 keeps statistics on the access time of the storage device 108. When the average access time is too long for a certain amount of time, say over 500 milliseconds for a period of 10 seconds, action is taken. Of course, various related embodiments are obvious to those skilled in the art, such as taking action when the median access time is too high, the maximum access time is too high or the standard deviation of the access time is too high.

In a further embodiment of the invention, action is taken when the average bit-rate of data flowing from the storage device 108 to the decompression unit 110 drops below a pre-determined level. Again, various variations are obvious to a person skilled in the art.

As mentioned in a previous paragraph, the pre-determined level may depend on the application that uses the storage device. When the application is the reproduction of a stream of audio-visual data that is stored on the storage device, this application may require a certain bit-rate for proper operation, say 4 Megabits per second. When the storage device is used by this application only, the performance of the storage device may be determined by the bit-rate and the pre-determined limit is 4 Megabits per second, preferably with a safety margin of 10%.

Actions that can be taken to reduce the level of the vibrations are numerous and depend on the set-up of an apparatus using the method according to the invention or an embodiment thereof. Embodiments described here are mainly related to audio vibrations. However, the invention may be used as well to reduce the influence of other vibrations on a storage system.

First, the apparatus can take action itself to kill the vibrations. Various embodiments of the method according the invention doing this will be discussed hereinafter. In another embodiment of the method according to the invention, the apparatus takes action to reduce the influence of the vibrations by providing a message to a user of the apparatus. The message advises a user to reduce vibrations. When this embodiment of the method according to the invention is used for example in a digital television set where the vibrations are most likely to be caused by sound produced by built-in speakers, a user may be supplied with an on-screen message to turn down the volume produced by the television set.

In a further embodiment, when a television set equipped with a recording device records a television program for time shift purposes, a user is advised to watch the recorded program in a live mode, rather than with a delay. In this way, the program does not have to be recorded and the recording process is not influenced by any vibrations, because there is no recording process.

In yet a further embodiment of the invention, general 'household' activities of the hard disk, like background defragmentation, are halted when the performance of the hard disk drive degrades because of e.g. vibrations. In this way, the normal recording and/or playback process can be continued without problems. The 'household' activities are continued when the performance of the hard disk drive is up again.

As mentioned previously, the apparatus can take also action itself to reduce the influence of vibrations. In one embodiment according to the invention, the amount of vibrations is reduced. When this embodiment of the method according to the invention is used in a TV-set 200 (Fig. 2) comprising speakers 210 (Fig. 2) which produce vibrations (sound) disturbing the performance of a storage device built in the TV-set , the volume of the sound produced by the speakers is reduced. In yet another embodiment, only the levels of certain parts of the frequency spectrum causing vibrations are killed. Examples may be found in US-B-6 067 362.

However, it might be possible that a user prefers a loud sound to go with a program presented by a TV-set and still wants to record a program. In this case, the problem may be solved by shutting down speakers comprised by the TV-set and provide sound via other speakers. This is depicted in Fig. 3, which shows a TV-set 300 with a built-in left speaker 310, a built-in right speaker 320 and connected to a left satellite speaker 330, a right satellite speaker 340 and a back satellite speaker 350. The TV-set 300 comprises a storage device (not shown).

When the performance of the storage device drops below a level which is not acceptable for the task it is performing at that time, the sound of the built-in left speaker 310 and the built-in right speaker 320 is cut off and re-directed to the left satellite speaker 330, the right satellite speaker 340, respectively, and - optionally- the back satellite speaker 350.

The remote speakers may already have been switched on when sound to the built-in speakers is switched off. In one embodiment of the method according to the invention, no sound is redirected from the built-in speakers to the remote speakers. In a further embodiment, the sound of the built-in speakers is re-directed and added to the sound already produced by the remote speakers.

When the satellite speakers are located far away enough, the sound vibrations they produce will no longer influence the storage device built in the TV-set 300. When the sound level produced by the TV-set is reduced to a level at which no degradation of the performance of the storage device was detected, the built-in left speaker 310 and the built-in right speaker 320 may be switched on again.

Alternatively, this is done when the performance of the storage device increases to a level above a further pre-determined limit that may be equal to the predetermined level at which the sound of the built-in left speaker 310 and the built-in right speaker 320 is cut off.

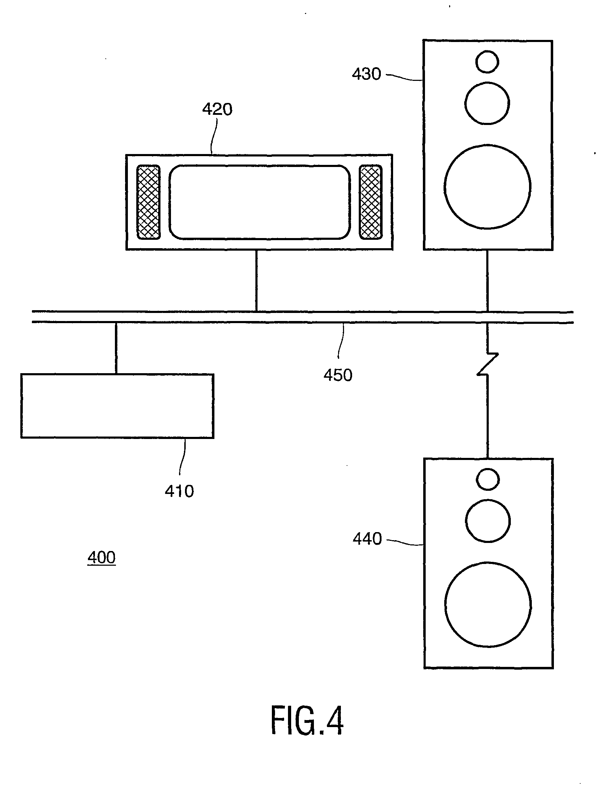

Another embodiment of the method according to the invention will be described with reference to Fig. 4, which shows a network environment 400, comprising a server 410, a TV-set 420, a first speaker 430 located close to the TV-set 420 comprising a storage device (not shown), a second speaker 440 located away from the TV-set 420 and a wired or wireless network 450 connecting all devices. The devices may communicate over the network directly to each other or via the server 410, using any kind of protocol from Aloha to USB and TCP/IP and many more without departing from the scope of the invention.

In normal operation of the TV-set 420 when reproducing audio-visual data stored on the storage device, audio data is reproduced by the first speaker 430. When the performance of the storage device drops below a pre-determined level, this is signaled to the server 410, which will lower the sound produced by the first speaker 430.

The reduction of the sound volume may be compensated by reproducing the audio-data by the second speaker 440 as well. Since the second speaker 440 is located away from the TV-set, influence of the sound vibrations produced by the second speaker 440 on the performance of the storage device will be much less. In a further embodiment of the invention, the storage device is located in the server 410, which may be located in the vicinity of a speaker or other source of vibrations as well.

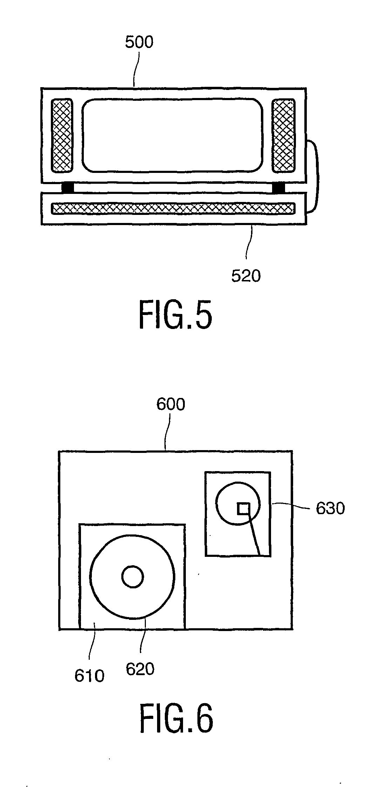

Vibrations may be airborne like sound waves traveling through the air, but also traveling in structures and traveling from one structure to an adjacent structure. Fig. 5 shows a TV-set 500 comprising a storage device (not shown), with a sub-woofer unit 520 connected thereto. The sub-woofer unit 520 is a speaker designed to augment low frequency components of an audio signal, preferably generated by the TV-set 500.

While producing low-frequency audio signals, not only the speaker membrane (not shown) of the sub-woofer unit 520 will vibrate, but also the full outer structure of the sub-woofer unit 520. These vibrations will be transferred to the TV-set 500, influencing the performance of the storage device. According to a preferred embodiment, when the level of vibrations is too high so that normal operation of the storage device is not possible, the sub-woofer is turned off by a controller (not shown) in the TV-set 500. In a further embodiment of the invention, the sound produced by the subwoofer is attenuated when vibrations hamper proper performance of the storage device.

Airborne or structure-borne vibrations may also be amplified by the environment in which the TV-set 500 is placed. In that case, the method according to the invention will take action at a lower sound volume.

Fig. 6 shows a consumer electronics recording device 600 for recording audio-visual data. The recording device 600 comprises an optical disk drive 610 for reading data from and writing audio-visual data to an optical disk 620 and further comprises a hard disk - drive 630 for storage and retrieval of audio-visual data.

When reading or writing data at high speeds - higher than real-time - , the optical disk 620 is rotated at high speeds, generating aerodynamic noise. This is a very wide spectrum noise having a significant energy level, causing the structure of the recording device 600 to vibrate. Since the hard disk drive 630 is built in the structure of the recording device 600, vibration will be transferred to the hard disk drive 630, hampering the performance of the hard disk drive 630.

The influence of the vibration in the structure on the hard disk drive 630 may be reduced by various means of suspension, but since consumer electronics devices should not be too large and not too heavy, this is not always a proper solution. Furthermore, suspension does not solve the problem of airborne vibrations caused by the optical disk drive 610 and isolation to solve this problem consumes valuable space and creates cooling problems.

According to an embodiment of the method according to the invention, the recording device takes action to reduce the influence of the vibrations caused by the optical disk drive 610 on the performance of the hard disk drive 630. In one embodiment, the rotation speed of the optical disk 630 is reduced. In a further embodiment, a user is warned that the high rotation speed of the optical disk is hampering the performance of the hard disk drive 630 and the user is either advised to reduce the rotational speed of the optical disk or cancel activities that involve action of the hard disk drive 630.

The performance of the storage device may well be below the threshold at which, according to the invention, action is taken for a longer period of time. For certain embodiments, this might be the case when a user prefers a high sound level, especially of lower frequency components, and takes the performance degradation of the storage device and all its consequences for granted. In that case, action is taken continuously, which may be quite annoying to a user of the consumer electronics apparatus according to the invention.

To prevent this, an embodiment of the method according to the invention replaces the pre-determined level below which action is taken to reduce the influence of the vibrations by a further lower pre-determined level when the performance of the storage device is below the pre-determined level during a longer period of time.

Also, the performance of a storage device and especially the performance of a hard disk drive is influenced by the temperature of the storage device. A hot environment may also cause performance degradation below the pre-determined level at which the method according to the invention takes action. However, reducing vibrations would have little or no effect on the performance of the hard disk drive. Therefore, according to an embodiment of the invention, no action is taken when the performance of the storage device reduces below a pre-determined level and the temperature of the storage device is above a further pre-determined level.

To this end, the storage device may be equipped with a temperature sensor. Some hard disk drives are already equipped with a temperature sensor; this sensor may be used when employing this embodiment of the method according to the invention.

It will be apparent to any person skilled in the art from the description of the preferred embodiment that the source of vibrations is not limited to sound sources or spinning disks, but extends beyond that. The invention may also be employed in cars, which are known to be an environment with lots of vibrations.

It will also be apparent that the storage device is not limited to a hard disk drive or an optical disk drive, but may be used in any environment using a storage device susceptible to vibrations.

Furthermore, it will be understood as well that the action taken by the method according to the invention when the performance of the storage device drops below a pre-determined level may be embodied in numerous ways; direct as well as via a user of a device employing the method according to the invention.

The invention may be summarized as follows:
Memory systems like disk drives are usually sensitive to vibrations. In a consumer electronics environment, with reproduction of audio, this is a problem because audio reproduction means generating vibrations. To prevent performance degradation of the memory system, action is taken to reduce the influence of vibrations on the memory system. This is only done when the performance of the storage system drops below a pre-determined level when it causes such a degradation of performance that it is annoying for a user. Of course, the pre-determined level is - among others - influenced by the application that uses the memory system. Actions to be taken may be reducing the sound level, but also advising a user to reduce the sound level or cancel operations that use the storage system.

## Claims

1. A method of operating a data storage device (108) sensitive to vibrations in an environment with a source of vibrations (116, 118, 620), **characterized in that** the method comprises the following steps:
(a) measuring (150) during operation the performance of the data storage device (108) as regards access time and/or average bit-rate and/or maximum achievable data retrieval or storage rate, and
(b) when the performance, measured in step a, of the storage device decreases below a pre-determined level during operation, taking action to reduce the influence of vibrations generated by the source of vibrations.

2. A method as claimed in claim 1, wherein the action to reduce the influence of vibrations generated by the source of vibrations is taken only when the performance of the storage device decreases below a pre-determined level.

3. A method as claimed in claim 1, wherein the performance of the storage device is determined by measuring access time statistics of the storage device and wherein an increase in the access time indicates a reduction in the performance.

4. A method as claimed in claim 1, wherein the action comprises the step of providing a message to a user to reduce the vibrations.

5. A method as claimed in claim 1, wherein the source of vibrations is at least one loudspeaker (116, 118), and the action taken is reduction of the levels of certain parts of the frequency spectrum causing vibrations.

6. A method as claimed in claim 1, wherein the source of vibrations is a loudspeaker (116, 118) and the action is reduction of the volume of the sound produced by the loudspeaker.

7. A method as claimed in claim 1, wherein when the performance decreases below the pre-determined level and the environmental temperature of the storage device is above a further pre-determined level, no action to reduce the influence of vibrations generated by the source of vibrations is taken.

8. A method as claimed in claim 1, wherein
(a) the storage device (108) is part of a consumer electronics apparatus (100), which further comprises a loudspeaker;
(b) the storage device is arranged to record an incoming stream of audio-visual data;
(c) the consumer electronics apparatus is arranged to reproduce the incoming stream of audio-visual data by means of a screen (120) and the loudspeaker; and
wherein the method further comprises the steps of:
(d) storing the incoming stream of audio-visual data on a disk of the storage device; and
(e) reproducing the stored stream of audio-visual data stored on the disk by means of a screen and the loudspeaker.

9. A method as claimed in claim 8, wherein the action to reduce the influence of vibrations generated by the source of vibrations comprises the step of advising a user to render the incoming stream of audio-visual data instead of reproducing the stored stream of audio-visual data.

10. A method as claimed in claim 1, wherein
(a) the storage device (108) is part of a consumer electronics apparatus (100) arranged to reproduce at least audio data, which consumer electronics apparatus comprises a loudspeaker;
(b) at least one further loudspeaker (330, 340), not comprised by the consumer electronics apparatus, is connected to the consumer electronics apparatus; and
(c) the action to reduce the influence of vibrations comprises the steps of:
i.) halting reproduction of the audio data through the loudspeaker comprised by the consumer electronics apparatus; and
ii.) starting reproduction of the audio data through the further loudspeaker.

11. A method as claimed in claim 1, wherein the source of vibrations is comprised by a first apparatus (420) and the storage device is comprised by a second apparatus (410); the first and the second apparatus are connected through a network link (450); and the action is controlling the first apparatus by reducing the influence of the vibrations caused by the source of vibrations.

12. A method as claimed in claim 1, wherein the pre-determined level is replaced by a further lower pre-determined level when the performance of the storage device is below the predetermined level during a pre-determined period.

13. A method as claimed in claim 1, wherein the storage device is a disk drive (630).

14. A method as claimed in claim 1, wherein the action in reducing the influence of vibrations is halting activities related to the storage device other than storage and retrieval of audio-visual data.

15. Circuit for operating a data storage device (108) in an environment with a source of vibrations (116, 118, 610), the circuit comprising a control unit (150), **characterized in that** the control unit comprises means so as to:
(a) measure during operation the performance of the data storage device as regards access time and/or average bit-rate and/or maximum achievable data retrieval or storage rate; and
(b) when the performance measured in a, of the storage device decreases below a pre-determined level during operation, take action to reduce the influence of vibrations generated by the source of vibrations.

16. The circuit as claimed in claim 15, wherein the action to reduce the influence of vibrations generated by the source of vibrations is taken only when the performance of the storage device decreases below a pre-determined level.

17. Consumer electronics apparatus (100) comprising:
(a) means for receiving (102) a stream of audio-visual data;
(b) a data storage device (108) arranged to store the stream of audio-visual data on a disk;
(c) a source of vibrations (116, 118, 610); **characterized by**
(d) the circuit according to claim 15 or 16 for operating the data storage device (108).

18. Consumer electronics apparatus as claimed in claim 17, wherein the source of vibrations is a disk drive (610) arranged to spin a disk (620) in operation.

19. Consumer electronics apparatus as claimed in claim 17, wherein the source of vibrations is a loudspeaker (116, 118), and the action taken is reduction of the levels of certain parts of the frequency spectrum causing vibrations.

20. Consumer electronics apparatus as claimed in claim 17, wherein the source of vibrations is a loudspeaker (116, 118) and the action taken is reduction of the volume of the sound produced by the loudspeaker.

## Patentansprüche

1. Verfahren zum Betreiben einer Datenspeichervorrichtung (108), die in einer Umgebung mit einer Quelle von Vibrationen (116, 118, 620) vibrationsempfindlich ist, **dadurch gekennzeichnet, dass** das Verfahren die folgenden Schritte umfasst:
(a) Messen (150) der Leistung der Datenspeichervorrichtung (108) bezüglich der Zugriffszeit und/oder durchschnittlichen Bitrate und/oder des maximal erreichbaren Datenauslesens oder der Speicherungsrate während des Betriebs, sowie
(b) Maßnahmen, um den Einfluss von, von der Vibrationsquelle erzeugten Vibrationen zu reduzieren, sobald die in Schritt (a) gemessene Leistung der Speichervorrichtung während des Betriebs unter einen zuvor festgelegten Pegel abfällt.

2. Verfahren nach Anspruch 1, wobei die Maßnahmen zur Reduzierung des Einflusses von, von der Vibrationsquelle erzeugten Vibrationen nur dann ergriffen werden, wenn die Leistung der Speichervorrichtung unter einen zuvor festgelegten Pegel abfällt.

3. Verfahren nach Anspruch 1, wobei die Leistung der Speichervorrichtung durch Messen einer Zugriffszeitstatistik der Speichervorrichtung bestimmt wird, und wobei eine Zunahme der Zugriffszeit eine Reduzierung der Leistung signalisiert.

4. Verfahren nach Anspruch 1, wobei die Maßnahmen den Schritt des Übermittelns einer Nachricht an einen Benutzer zwecks Reduzierung der Vibrationen umfassen.

5. Verfahren nach Anspruch 1, wobei die Vibrationsquelle mindestens ein Lautsprecher (116, 118) ist und die ergriffenen Maßnahmen die Reduzierung der Pegel von bestimmten, Vibrationen hervorrufenden Teilen des Frequenzspektrums umfassen.

6. Verfahren nach Anspruch 1, wobei die Vibrationsquelle ein Lautsprecher (116, 118) ist und die ergriffenen Maßnahmen die Reduzierung der Lautstärke des von dem Lautsprecher erzeugten Tons umfassen.

7. Verfahren nach Anspruch 1, wobei, wenn die Leistung unter den zuvor festgelegten Pegel abfällt und die Umgebungstemperatur der Speichervorrichtung oberhalb eines weiteren, zuvor festgelegten Pegels liegt, keine Maßnahmen ergriffen werden, um den Einfluss von, von der Vibrationsquelle erzeugten Vibrationen zu reduzieren.

8. Verfahren nach Anspruch 1, wobei
(a) die Speichervorrichtung (108) einen Teil eines Unterhaltungselektronikgeräts (100) darstellt, welches weiterhin einen Lautsprecher umfasst;
(b) das Unterhaltungselektronikgerät angeordnet ist, um einen ankommenden Strom von audiovisuellen Daten aufzuzeichnen;
(c) das Unterhaltungselektronikgerät angeordnet ist, um den ankommenden Strom von audiovisuellen Daten mit Hilfe eines Bildschirms (120) und des Lautsprechers wiederzugeben; und
wobei das Verfahren weiterhin die folgenden Schritte umfasst:
(d) Speichern des ankommenden Stroms von audiovisuellen Daten auf einer Diskette der Speichervorrichtung; sowie
(e) Wiedergeben des gespeicherten Stroms von, auf der Diskette gespeicherten, audiovisuellen Daten mit Hilfe eines Bildschirms und des Lautsprechers.

9. Verfahren nach Anspruch 8, wobei das Vorgehen, den Einfluss von, durch die Vibrationsquelle erzeugten Vibrationen zu reduzieren, den Schritt des Benachrichtigens eines Benutzers, den ankommenden Strom von audiovisuellen Daten statt des gespeicherten Stroms von audiovisuellen Daten wiederzugeben, umfasst.

10. Verfahren nach Anspruch 1, wobei
(a) die Speichervorrichtung (108) Teil eines Unterhaltungselektronikgeräts (100) ist, welches angeordnet ist, um zumindest Audiodaten wiederzugeben, wobei das Unterhaltungselektronikgerät einen Lautsprecher umfasst;
(b) mindestens ein weiterer Lautsprecher (330, 340), den das Unterhaltungselektronikgerät nicht umfasst, mit dem Unterhaltungselektronikgerät verbunden ist; und
(c) die Maßnahmen, den Einfluss von Vibrationen zu reduzieren, die folgenden Schritte umfassen:
i.) Stoppen der Wiedergabe der Audiodaten durch den in dem Unterhaltungselektronikgerät enthaltenen Lautsprecher; sowie
ii.) Beginnen der Wiedergabe der Audiodaten durch den weiteren Lautsprecher.

11. Verfahren nach Anspruch 1, wobei die Vibrationsquelle von einem ersten Gerät (420 und die Speichervorrichtung von einem zweiten Gerät (410) umfasst wird, das erste und das zweite Gerät durch eine Netzwerkverbindung (450) verbunden sind und durch das Vorgehen das erste Gerät durch Reduzieren des Einflusses der von der Vibrationsquelle erzeugten Vibrationen gesteuert wird.

12. Verfahren nach Anspruch 1, wobei der zuvor festgelegte Pegel durch einen weiteren, geringeren, zuvor festgelegten Pegel ersetzt wird, wenn die Leistung der Speichervorrichtung während einer zuvor festgelegten Periode unterhalb des zuvor festgelegten Pegels liegt.

13. Verfahren nach Anspruch 1, wobei die Speichervorrichtung ein Diskettenlaufwerk (630) ist.

14. Verfahren nach Anspruch 1, wobei durch das Vorgehen zur Reduzierung des Einflusses von Vibrationen die Aktivitäten hinsichtlich der Speichervorrichtung mit Ausnahme der Speicherung und des Auslesens von audiovisuellen Daten gestoppt werden.

15. Schaltung zum Betreiben einer Datenspeichervorrichtung (108) in einer Umgebung mit einer Quelle von Vibrationen (116, 118, 610), wobei die Schaltung eine Steuereinheit (150) umfasst, **dadurch gekennzeichnet, dass** die Steuereinheit Mittel umfasst, um
(a) während des Betriebs die Leistung der Datenspeichervorrichtung bezüglich der Zugriffszeit und/oder durchschnittlichen Bitrate und/oder des maximal erreichbaren Datenauslesens oder der Speicherungsrate zu messen, und
(b) Maßnahmen zu ergreifen, um den Einfluss von, von der Vibrationsquelle erzeugten Vibrationen zu reduzieren, sobald die in Schritt (a) gemessene Leistung der Speichervorrichtung während des Betriebs unter einen zuvor festgelegten Pegel abfällt.

16. Schaltung nach Anspruch 15, wobei die Maßnahmen zur Reduzierung des Einflusses von, von der Vibrationsquelle erzeugten Vibrationen nur ergriffen werden, wenn die Leistung der Speichervorrichtung unter einen zuvor festgelegten Pegel abfällt.

17. Unterhaltungselektronikgerät (100) mit:
(a) Mitteln (102) zum Empfang eines Stroms von audiovisuellen Daten;
(b) einer Datenspeichervorrichtung (108), die angeordnet ist, um den Strom von audiovisuellen Daten auf einer Diskette zu speichern;
(c) einer Quelle von Vibrationen (116, 118, 610); **gekennzeichnet durch**
(d) die Schaltung nach Anspruch 15 oder 16 zum Betreiben der Datenspeichervorrichtung (108).

18. Unterhaltungselektronikgerät nach Anspruch 17, wobei die Vibrationsquelle ein Diskettenlaufwerk (610) ist, welches angeordnet ist, um eine Diskette (620) bei Betrieb zu drehen.

19. Unterhaltungselektronikgerät nach Anspruch 17, wobei die Vibrationsquelle ein Lautsprecher (116, 118) ist und die ergriffenen Maßnahmen die Reduzierung der Pegel von bestimmten, Vibrationen hervorrufenden Teilen des Frequenzspektrums umfassen.

20. Unterhaltungselektronikgerät nach Anspruch 17, wobei die Vibrationsquelle ein Lautsprecher (116, 118) ist und die ergriffenen Maßnahmen die Reduzierung der Lautstärke des von dem Lautsprecher erzeugten Tons umfassen.

## Revendications

1. Procédé d'exploitation d'un dispositif de stockage de données (108) qui est sensible à des vibrations dans un environnement avec une source de vibrations (116, 118, 620), **caractérisé en ce que** le procédé comprend les étapes suivantes consistant à :
(a) mesurer (150), au cours du fonctionnement, la performance du dispositif de stockage de données (108) en ce qui concerne le temps d'accès et ou le débit binaire moyen et/ou l'extraction maximale réalisable de données ou le taux de stockage, et
(b) entreprendre, lorsque la performance du dispositif de stockage qui est mesurée dans l'étape (a) diminue au-dessous d'un niveau prédéterminé au cours du fonctionnement, l'action pour réduire l'influence de vibrations qui sont générées par la source de vibrations.

2. Procédé selon la revendication 1, dans lequel l'action pour réduire l'influence de vibrations qui sont générées par la source de vibrations est entreprise seulement lorsque la performance du dispositif de stockage diminue au-dessous d'un niveau prédéterminé.

3. Procédé selon la revendication 1, dans lequel la performance du dispositif de stockage est déterminée par la mesure des statistiques de temps d'accès du dispositif de stockage et dans lequel une augmentation du temps d'accès indique une réduction de la performance.

4. Procédé selon la revendication 1, dans lequel l'action comprend l'étape suivante consistant à fournir un message à un utilisateur pour réduire les vibrations.

5. Procédé selon la revendication 1, dans lequel la source de vibrations est au moins un haut-parleur (116, 118) et dans lequel l'action qui est entreprise est une réduction des niveaux de certaines parties du spectre de fréquences qui causent des vibrations.

6. Procédé selon la revendication 1, dans lequel la source de vibrations est un haut-parleur (116, 118) et dans lequel l'action qui est entreprise est une réduction du volume du son qui est produit par le haut-parleur.

7. Procédé selon la revendication 1, dans lequel, lorsque la performance diminue au-dessous du niveau prédéterminé et dans lequel la température de l'environnement du dispositif de stockage se situe au-dessus d'un nouveau autre niveau prédéterminé, pas d'action pour réduire l'influence de vibrations qui sont générées par la source de vibrations n'est entreprise.

8. Procédé selon la revendication 1, dans lequel :
(a) le dispositif de stockage (108) fait partie d'un appareil électronique grand public (100) qui comprend encore un haut-parleur ;
(b) le dispositif de stockage est agencé de manière à enregistrer un flux d'entrée de données audiovisuelles ;
(c) l'appareil électronique grand public est agencé de manière à reproduire le flux d'entrée de données audiovisuelles au moyen d'un écran (120) et du haut-parleur ; et
dans lequel le procédé comprend encore les étapes suivantes consistant à :
(d) stocker le flux d'entrée de données audiovisuelles sur un disque du dispositif de stockage ; et
(e) reproduire le flux stocké de données audiovisuelles qui sont stockées sur le disque au moyen d'un écran et du haut-parleur.

9. Procédé selon la revendication 8, dans lequel l'action pour réduire l'influence de vibrations qui sont générées par la source de vibrations comprend l'étape suivante consistant à conseiller un utilisateur de rendre le flux d'entrée de données audiovisuelles au lieu de reproduire le flux stocké de données audiovisuelles.

10. Procédé selon la revendication 1, dans lequel :
(a) le dispositif de stockage (108) fait partie d'un appareil électronique grand public (100) qui est agencé de manière à reproduire au moins des données audio, lequel appareil électronique grand public comprend un haut-parleur ;
(b) au moins un nouveau autre haut-parleur (330, 340) qui n'est pas renfermé par l'appareil électronique grand public est connecté à l'appareil électronique grand public ; et
(c) l'action pour réduire l'influence de vibrations comprend les étapes suivantes consistant à :
i.) arrêter la production des données audio par le biais du haut-parleur qui est renfermé par l'appareil électronique grand public ; et
ii.) démarrer la reproduction des données audio par le biais du nouveau autre haut-parleur.

11. Procédé selon la revendication 1, dans lequel la source de vibrations est renfermée par un premier appareil (420) et dans lequel le dispositif de stockage est renfermé par un deuxième appareil (410) ; dans lequel le premier et le deuxième appareil sont connectés par le biais d'une liaison du réseau (450) et dans lequel l'action est en cours de commander le premier appareil en réduisant l'influence des vibrations qui sont causées par la source de vibrations.

12. Procédé selon la revendication 1, dans lequel le niveau prédéterminé est remplacé par un nouveau autre plus bas niveau prédéterminé lorsque la performance du dispositif de stockage se situe au-dessous du niveau prédéterminé pendant une période prédéterminée.

13. Procédé selon la revendication 1, dans lequel le dispositif de stockage est une unité d'entraînement de disque (630).

14. Procédé selon la revendication 1, dans lequel l'action pour réduire l'influence de vibrations est en cours d'arrêter des activités relatives au dispositif de stockage autres que le stockage et l'extraction de données audiovisuelles.

15. Circuit pour faire fonctionner un dispositif de stockage de données (108) dans un environnement avec une source de vibrations (116, 118, 610), le circuit comprenant une unité de commande (150), **caractérisé en ce que** l'unité de commande comprend des moyens pour :
(a) mesurer, au cours du fonctionnement, la performance du dispositif de stockage de données en ce qui concerne le temps d'accès et ou le débit binaire moyen et/ou l'extraction maximale réalisable de données ou le taux de stockage, et
(b) entreprendre, lorsque la performance du dispositif de stockage qui est mesurée dans l'étape (a) diminue au-dessous d'un niveau prédéterminé au cours du fonctionnement, l'action pour réduire l'influence de vibrations qui sont générées par la source de vibrations.

16. Circuit selon la revendication 15, dans lequel l'action pour réduire l'influence de vibrations qui sont générées par la source de vibrations est entreprise seulement lorsque la performance du dispositif de stockage diminue au-dessous d'un niveau prédéterminé.

17. Appareil électronique grand public (100) comprenant :
(a) des moyens pour recevoir (102) a flux de données audiovisuelles ;
(b) un dispositif de stockage de données (108) qui est agencé de manière à stocker le flux de données audiovisuelles sur un disque ;
(c) une source de vibrations (116, 118, 610) ; **caractérisé par** :
(d) le circuit selon la revendication 15 ou selon la revendication 16 pour faire fonctionner le dispositif de stockage de données (108).

18. Appareil électronique grand public selon la revendication 17, dans lequel la source de vibrations est une unité d'entraînement de disque (610) qui est agencée de manière à faire tourner un disque (620) en fonctionnement.

19. Appareil électronique grand public selon la revendication 17, dans lequel la source de vibrations est un haut-parleur (116, 118) et dans lequel l'action qui est entreprise est une réduction des niveaux de certaines parties du spectre de fréquences qui causent des vibrations.

20. Appareil électronique grand public selon la revendication 17, dans lequel la source de vibrations est un haut-parleur (116, 118) et dans lequel l'action qui est entreprise est une réduction du volume du son qui est produit par le haut-parleur.
